Europäisches Patentamt

European Patent Office

Office européen des brevets

(19)

(11) Publication number: **0 440 586 A2**

# EUROPEAN PATENT APPLICATION

(12)

(21) Application number: 91810059.5

(22) Date of filing: 28.01.91

(51) Int. Cl.[5]: **A23L 1/308**

(30) Priority: 30.01.90 DE 4002663

(43) Date of publication of application:
07.08.91 Bulletin 91/32

(84) Designated Contracting States:
AT BE CH DE DK ES FR GB GR IT LI LU NL SE

(71) Applicant: **SANDOZ NUTRITION Ltd.**
**Monbijoustrasse 118**
**CH-4002 Berne (CH)**

(72) Inventor: **Schaller, Hans**
**Carl-Muth-strasse 24**
**W-6520 Worms (DE)**

(74) Representative: **Smolders, Walter et al**
**c/o Sandoz Technology Ltd., Lichtstrasse 35**
**CH-4002 Basel (CH)**

(54) Improvements in or relating to organic compounds.

(57) A liquid foodstuff which is supplemented with dietary fibre is described, the specific interaction of which both curbs the appetite and promotes intestinal activity, which is achieved in that the liquid foodstuff contains from 15 to 30 g/l of total dietary fibre and in addition 30 to 60 g/l concentrated aqueous extract from dried plums and from 65 to 150 g/l of fructose.

EP 0 440 586 A2

EP 0 440 586 A2

## IMPROVEMENTS IN OR RELATING TO ORGANIC COMPOUNDS

The invention relates to a liquid foodstuff which is supplemented with dietary fibres, and which, compared with the previously-known liquid foodstuffs, contains a significantly higher content of soluble and insoluble dietary fibres, and which as a result of the special preparation of the dietary fibres has especially good tolerance as regards taste.

By dietary fibres are understood the total of indigestible food components which through their volume as filling material promote transport through the intestines and stimulate peristalsis. Even if the dietary fibres are materials in food which the body and its digestive organs cannot use since they cannot be converted into energy, they are of great significance nevertheless in the digestive process. Typical dietary fibres are in particular those cellulose components that are also called raw fibres.

Studies have shown that at least in Western societies too little dietary fibre is taken in. The dietary fibre prolongs the length of time the food remains in the stomach. At the same time, it prevents sluggishness of the bowels, counteracts constipation and increases secretion of the digestive juices. It is a frequently ignored fact that the intestines only function correctly when they are well filled. Dietary fibres contribute to this, whereby they mechanically stimulate the intestinal wall and, moreover, in some cases serve essential bacteria serve as a source of food.

Since it is essential that not only dietary fibres, but also a sufficient quantity of liquids are taken in, it has already been proposed that the content of dietary fibres in liquid foodstuffs is supplemented and is increased by adding soluble and/or insoluble dietary fibres. This failed however, mainly in that attempts to develop stable preparations which satisfied the desired quality requirements were unsuccessful.

Recently we have become aware of the development of liquid foodstuffs supplemented with dietary fibre, which contain a significantly higher content of soluble and insoluble dietary fibres and have satisfactory physical stability and sensory and chemical qualities. These liquid foodstuffs contain 10 to 30 g/l of total dietary fibre, of which at least 50 % by weight is insoluble and at least 10 % by weight is soluble, whereby the insoluble dietary fibres originate mainly from fibrous material from fruits and/or vegetables and the soluble dietary fibres originate mainly from fruit and/or vegetable purees or pulps or are added in the form of pectin, guar and carob bean flour or mixtures thereof. Part of the total soluble dietary fibre plays the role of a stabilizer for the insoluble dietary fibre. Said liquid foodstuffs which are not yet publicly known may also contain additional fruit juice concentrate and/or vegetable juice concentrate, sweetening agents and/or sweet substances, flavouring acids and aromas. The latter products only serve to supplement and improve the sensory quality of the product. Their quantities are selected so that in all a very acceptable foodstuff of high quality is obtained. The concentrate of fruit juice and/or vegetable juice which is used may be any corresponding concentrate which is used in the foodstuffs industry. The sweetening agents are similarly all the usual sugar, sugar mixtures, syrups and natural sweetening concentrates, which are legally permissible in provisions, such as saccharose, glucose, fructose, invert sugar, grape juice concentrates, etc. The sweet substances are also basically all sweet substances which are legally permissible in provisions. The same applies to the flavouring acids, for which all the usual acids which are legally permissible in provisions may be used, such as citric acid, tartaric acid, lactic acid and malic acid. Finally, various aromas and in addition minerals and/or vitamins, as well as additional protein, may be added to the liquid foodstuffs. The type and quantity of these additives depends on which other components the liquid foodstuff is produced from and which further additives it should have to optimise its sensory, physical, chemical and nutrition-physiological properties.

Solid foodstuffs which have an increased content of dietary fibre, have already been proposed to simulate a feeling of fullness. However, since a higher increase of dietary fibre presupposes a sufficient intake of liquid, there is a considerable need for a liquid foodstuff, by which a great part of the need for total dietary fibre could be supplied. The consumption of such liquid foodstuffs would no longer lead to the previous unbalanced diet which is low in dietary fibre.

It is therefore the aim of the present invention to develop a liquid foodstuff which is supplemented with dietary fibre, and which because of its special composition should both curb the appetite and promote intestinal activity.

This problem is solved according to the invention by a liquid foodstuff which is supplemented with dietary fibre, and contains 15 to 30 g/l, preferably 20 g/l and more dietary fibre, of which at least 50 % by weight is insoluble and at least 10 % by weight is soluble, and which in addition contains 30 to 60 g/l, preferably 40 g/l and more of a concentrated aqueous extract from dried plums and 65 to 150 g/l, preferably 7 to 120 g/l of fructose.

Preferably the insoluble dietary fibres originate mainly from fibrous material from fruits and/or vegetables.
The soluble dietary fibres originate preferably mainly from fruit and/or vegetable purees or pulps or are

2

EP 0 440 586 A2

added in the form of pectin, guar and carob bear flour or mixtures thereof.

The soluble dietary fibres are conveniently predominantly available as stabilizers for the insoluble dietary fibres.

Preferably at least 5 % of the dietary fibres contained in the foodstuff of the invention have a stabilizing effect. Dietary fibres having a stabilizing effect include pectin, guar and carab bean flour or mixtures thereof.

Through the combination of fructose in an exactly defined quantity which is appropriate to the activity, with dried fruit, especially dried plum extract, in conjunction with special dietary fibres, there is surprisingly attained the simultaneous effect of a reduction in hunger (feeling of satiation) and purgative effect.

In a further embodiment of the inventive notion, part of the dietary fibre originates from barley, rye and wheat which have been fermented with lactic acid. The advantage here is that these foodstuffs supply a certain amount of lactic acid together with the dietary fibre, which may contribute towards fine tuning of taste together with other flavouring acids.

Moreover, according to the invention, natural aromatics may additionally be added to the liquid foodstuff.

The composition of the invention is conveniently obtained by preparing a pre-mixture of the liquid and paste-like components in water, to which a mixture of the powder-like and solid components in water is added. The thus obtained mixture is, before or after pasteurization, homogenised with commercially available micronising machines such as homogenisers, colloid mills and the like. Where desired, additives such as aromas may be added, before or after the pasteurization.

The dietary fibres of fruits/vegetables should be sufficiently micronized to avoid sedimentation. Such micronisation may for example be effected before the processing, or during the homogenisation. In general, it is advantageous to micronise the dietary fibres to a size in the range of from 10 to 500 microns (μ).

One litre of a liquid foodstuff according to the invention may, for example, contain the following ingredients:

```
–  fructose                                    80   – 150 g/l
–  apricot pulp, acerola-cherry pulp           46   –  85 g/l
–  concentrated aqueous extract
   from dried plums                            30   –  60 g/l
–  maracuja juice                              25   –  50 g/l
–  fruit fibres from kernel free residual
   fruit particles from orange,
   maracuja, lemon, grapefruit
   obtained with the fruit juice
   preparation                                 40   –  75 g/l
–  fruit juice concentrate (lemon
and pineapple concentrate)                     2    –   7 g/l
–  dietary fibre from fruit and vegetables     12   –  18 g/l
–  barley, rye and wheat concentrate
   fermented with lactic acid                  12   –  18 g/l
–  natural aromatics                           0.5  –   1.0 g/l
–  water                                       remainder
                                               (up to 1 litre drink)
```

The result is an orange-coloured drink of cloudy appearance with a pleasant smell and taste, which is good and pleasant to drink.

### Example

A typical example of 1 litre of a liquid foodstuff according to the invention is as follows :

5 g apple refuse dietary fibres in powder form (the solid remainder from apple juice production)

3

10 g legume dietary fibres (in powder form)
1 g stabilisator (1 :1 :1 mixture of pectin, guar and carob bean flour)
70 g fruit and vegetable fibres
80 g fruit puree and pulps (apricots, acerola)
10 g fruit juice concentrate (lemon and pineapple concentrate)
120 g fructose sirup (70 %)
6 g lactic acid fermentation concentrate of cereals
1 g natural aromatics
50 g concentrated aqueous extract from dried plums.
the remainder being water.

## Claims

1. Liquid foodstuff which is supplemented with dietary fibre, containing 15 to 30 g/l of dietary fibre, of which at least 50 % by weight is insoluble and at least 10 % by weight is soluble, 30 to 60 g/l concentrated aqueous extract from dried plum and 65 to 150 g/l of fructose.

2. Liquid foodstuff according to Claim 1, in which part of the dietary fibres originate from barley, rye and wheat which have been fermented with lactic acid.

3. Liquid foodstuff according to Claim 1 or 2, additional containing natural aromatics

4. Liquid foodstuff according to Claims 1 to 3 containing from 40 to 60 g/l of concentrated extract from dried plums.

5. Liquid foodstuff according to Claims 1 to 4, containing from 70 to 120 g/l of fructose.